# EUROPEAN PATENT APPLICATION

(11) **EP 1 993 090 A2**
(43) Date of publication of application: **19.11.2008**
(21) Application number: 08009004.6
(22) Date of filing: 15.05.2008
(51) Int. Cl.: G09G 3/36, G02F 1/13

(54) **Liquid crystal display device**

(30) Priority: 16.05.2007 JP 2007130624
(71) Applicant: Hitachi Displays, Ltd., Mobara-shi, Chiba-ken (JP)
(72) Inventor: Oke, Ryutaro, Chiba-ken (JP); Ono, Kikuo, Chiba-ken (JP)
(74) Representative: Beetz & Partner

(57) **Abstract**

In a liquid crystal display device a display region is formed of a mass of pixels each having a first switching element (Tr1), a first pixel electrode (Px1) connected to the first switching element, a second switching element (Tr2), and a second pixel electrode (Px2) connected to the second switching element, the first switching element and the second switching element in one pixel are respectively connected with different video signal lines (DL1,DL2), and the relationship between a potential of a signal applied to the first pixel electrode in one pixel and a potential of a signal applied to the counter electrode and the relationship between a potential of a signal applied to the second pixel electrode in the one pixel and the potential of the signal applied to the counter electrode during one frame period is set such that one relationship assumes the positive-polarity relationship and the other relationship assumes the negative-polarity relationship.

## Description

The present application claims priority from Japanese application JP2007-130624 filed on May 16, 2007, the content of which is hereby incorporated by reference into this application.

### BACKGROUND OF THE INVENTION

### 1. Field of the Invention

The present invention relates to a liquid crystal display device, and more particularly to a technique effectively applicable to a liquid crystal display device in which one pixel includes two pixel electrodes connected to different video signal lines.

### 2. Description of the Related Art

Conventionally, with respect to a liquid crystal display device, there has been known a liquid crystal display device in which a display region is formed of a mass of pixels each having a switching element such as a TFT element and a pixel electrode, and such a liquid crystal display device is referred to as a VA-type (Vertical Alignment type) liquid crystal display device.

In a liquid crystal display panel used in the VA-type liquid crystal display device, for example, a plurality of scanning signal lines, a plurality of video signal lines, a plurality of switching elements, and a plurality of pixel electrodes are formed on one substrate out of two substrates which sandwich a liquid crystal material therebetween, and a counter electrode (also referred to as a common electrode) is formed on the other substrate out of these two substrates.

Further, in the VA-type liquid crystal display panel, the number of switching elements and the number of pixel electrodes used for controlling a gray scale (brightness) of one pixel are respectively set to 1 usually.

However, recently, for enhancing the visibility, for example, there has been proposed a VA-type liquid crystal display device in which the number of switching elements and the number of pixel electrodes used for controlling a gray scale (brightness) of one pixel are respectively set to 2 (for example, see JP-A-2006-309239 (corresponding US patent application US2007/0008263)(patent document 1)).

### SUMMARY OF THE INVENTION

In the VA-type liquid crystal display device having the constitution described in patent document 1, for example, two video signal lines are provided to one pixel, and two pixel electrodes which one pixel includes are connected to the respective different video signal lines by way of switching elements. By applying separate data voltage to the respective two pixel electrodes which the one pixel includes, the visibility can be enhanced.

However, in the VA-type liquid crystal display device having the constitution described in patent document 1, for example, signals which are applied to two pixel electrodes which one pixel includes during one frame period have the same polarity. Here, the polarity is the relationship between a potential of the signal applied to the pixel electrode and a potential of the signal applied to the counter electrode. In general, the relationship that the potential of the signal applied to the pixel electrode is higher than the potential of the signal applied to the counter electrode is referred to as positive polarity and the relationship that the potential of the signal applied to the pixel electrode is lower than the potential of the signal applied to the counter electrode is referred to as negative polarity.

Further, in the VA-type liquid crystal display device having the constitution described in patent document 1, for example, by displaying images using a drive method referred to as a dot inversion method in which the relationship of polarities of pixel electrodes of the respective pixels during one frame period assumes a checked pattern, it is possible to suppress the occurrence of a phenomenon referred to as flickers or a phenomenon referred to as vertical smears, for example, thus preventing the deterioration of image quality.

However, when the dot inversion driving is performed using the constitution and a data voltage (video signal) applying method described in the patent document 1, it is necessary to perform the dot inversion of the video signals at a stage that video signals to be applied to the respective video signal lines are generated. Accordingly, a heat value of a drive circuit which generates the video signals is increased thus giving rise to a drawback that an erroneous operation or a malfunction of the drive circuit is liable to easily occur.

Further, in the VA-type liquid crystal display device having the constitution described in patent document 1, for example, it is possible to display images using a drive method referred to as a column inversion method in which the relationship of polarities of pixel electrodes in the respective pixels during one frame period assumes the vertical stripe relationship. By performing the column inversion method, a heat value of a drive circuit which generates video signals can be suppressed to a low level.

However, when the column inversion driving is performed using the constitution and a data voltage (video signal) applying method described in patent document 1, for example, a phenomenon referred to as flickers (flow of vertical stripes) or a phenomenon referred to as vertical smears occurs thus giving rise to a drawback that image quality is liable to be easily deteriorated.

Accordingly, it is an object of the present invention to provide a technique which can, in a liquid crystal display device in which each one pixel includes two switching elements and two pixel electrodes, suppress a heat value of a drive circuit to a low level and, at the same time, prevent the deterioration of image quality.

The above-mentioned and other objects and novel features of the present invention will become apparent from the description of this specification and attached drawings.

To explain the summary of typical inventions among the inventions disclosed in this specification, they are as follows.
(1) In a liquid crystal display device which includes: a first substrate on which a plurality of scanning signal lines, a plurality of video signal lines, a plurality of switching elements and a plurality of pixel electrodes are formed; a second substrate on which a counter electrode is formed; and a liquid crystal material sandwiched between the first substrate and the second substrate, a display region is formed of a mass of pixels each having a first switching element, a first pixel electrode connected to the first switching element, a second switching element, and a second pixel electrode connected to the second switching element, the first switching element and the second switching element in one pixel are respectively connected with different video signal lines, and the relationship between a potential of a signal applied to the first pixel electrode in one pixel and a potential of a signal applied to the counter electrode and the relationship between a potential of a signal applied to the second pixel electrode in the one pixel and the potential of the signal applied to the counter electrode during one frame period are set such that one relationship assumes the positive-polarity relationship and the other relationship assumes the negative-polarity relationship.
(2) In the liquid crystal display device having the constitution (1), the relationship between the potential of the signal applied to the first pixel electrode in one pixel and the potential of the signal applied to the counter electrode and the relationship between a potential of a signal applied to the first pixel electrode in another one pixel adjacent to the one pixel with the scanning signal line or the video signal line sandwiched therebetween and the potential of the signal applied to the counter electrode during one frame period are set such that one relationship assumes the positive-polarity relationship and the other relationship assumes the negative-polarity relationship.
(3) In a liquid crystal display device which includes: a first substrate on which a plurality of scanning signal lines, a plurality of video signal lines, a plurality of switching elements and a plurality of pixel electrodes are formed; a second substrate on which a counter electrode is formed; and a liquid crystal material sandwiched between the first substrate and the second substrate, a display region is formed of a mass of pixels each having a first switching element, a first pixel electrode connected to the first switching element, a second switching element, and a second pixel electrode connected to the second switching element, the first switching element and the second switching element in one pixel are respectively connected with the different video signal lines, and in the extending direction of the video signal line, the pixel in which the first switching element is connected with the first video signal line and the second switching element is connected with the second video signal line, and the pixel in which the second switching element is connected with the first video signal line and the first switching element is connected with the second video signal line are arranged alternately.
(4) In the liquid crystal display device having the constitution (3), the first video signal line and the second video signal line are arranged to sandwich the pixels having switching elements connected to the respective video signal lines, and between two neighboring pixels arranged in parallel in the extending direction of the scanning signal line, the second video signal line for one pixel out of two pixels and the first video signal line for the other pixel out of two pixels are arranged.
(5) In the liquid crystal display device having the constitution (3) or (4), the relationship between a potential of a signal applied to the first video signal line and a potential of the counter electrode and the relationship between a potential of a signal applied to the second video signal line and the potential of the counter electrode during one frame period are respectively always assume the positive-polarity relationship or always assume the negative-polarity relationship, and when one relationship always assumes the positive-polarity relationship, the other relationship always assumes the negative-polarity relationship.
(6) In the liquid crystal display device having any one of the constitutions (3) to (5), one pixel electrode out of the first pixel electrode and the second pixel electrode has an annular closed planner shape which surrounds the other pixel.
(7) In the liquid crystal display device having any one of the constitutions (3) to (6), the switching element is a TFT element.

According to the liquid crystal display device of the present invention, in displaying images using the VA-type liquid crystal display device in which each one pixel includes two switching elements and two pixel electrodes, the respective pixels of the liquid crystal display panel can be driven by dot inversion driving while generating video signals corresponding to column inversion driving. Accordingly, a heat value of a drive circuit which generates the video signals can be suppressed to a low level thus preventing the deterioration of image quality attributed to the occurrence of flickers or the like.

### BRIEF DESCRIPTION OF THE DRAWINGS

Fig. 1A is a schematic plan view showing the schematic constitution of a liquid crystal display panel;
Fig. 1B is a cross-sectional view taken along a line A-A' in Fig. 1A;
Fig. 2 is a schematic circuit diagram showing one constitutional example of one pixel on a TFT substrate of the liquid crystal displaypanel according to the present invention;
Fig. 3A is a schematic plan view showing one specific example of one pixel on the TFT substrate of the liquid crystal display panel according to the present invention;
Fig. 3B is a cross-sectional view taken along a line B-B' in Fig. 3A;
Fig. 3C is a cross-sectional view taken along a line C-C' in Fig. 3A;
Fig. 4A is a schematic view showing one example of the conventional constitution and drive method of a liquid crystal display panel which becomes a premise of the present invention;
Fig. 4B is a schematic view showing another example of the conventional constitution and drive method of a liquid crystal display panel which becomes a premise of the present invention;
Fig. 5 is a schematic view showing one constitutional example of a liquid crystal display panel of an embodiment 1 according to the present invention;
Fig. 6 is a schematic view showing a modification of the liquid crystal display panel of the embodiment 1;
Fig. 7A is a schematic circuit diagram showing one example of parasitic capacitance generated in one pixel in the liquid crystal display panel of the embodiment 1;
Fig. 7B is a schematic view showing the constitution of the pixels arranged in the extending direction of a video signal line by focusing on the parasitic capacitance;
Fig. 7C is a schematic chart showing a change of potentials of video signals applied to the video signal lines shown in Fig. 7B and pixel electrodes shown in Fig. 7B; and
Fig. 8 is a schematic circuit diagram showing one constitutional example of a liquid crystal display panel of an embodiment 2 according to the present invention.

### DESCRIPTION OF THE PREFERRED EMBODIMENT

Hereinafter, the present invention is explained in detail in conjunction with embodiments by reference to the drawings.

Here, in all drawings for explaining the embodiments, parts having identical functions are given same numerals and their repeated explanation is omitted.

### [Embodiment]

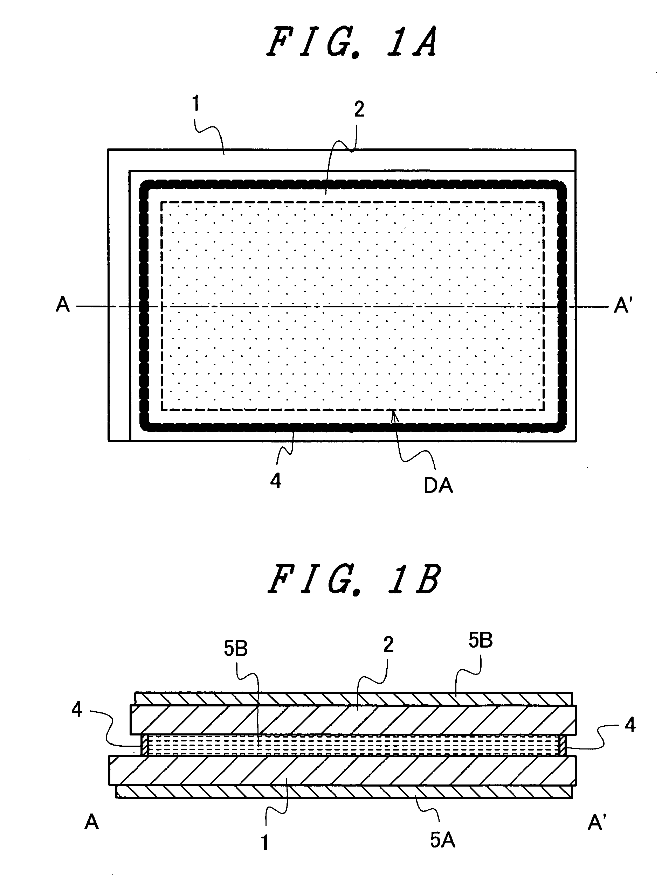

Fig. 1A, Fig. 1B, Fig. 2 and Fig. 3A to Fig. 3C are respectively views showing the schematic constitution of a liquid crystal display device according to the present invention.

Fig. 1A is a schematic plan view showing the schematic constitution of a liquid crystal display panel, and Fig. 1B is a cross-sectional view taken along a line A-A' in Fig. 1A.

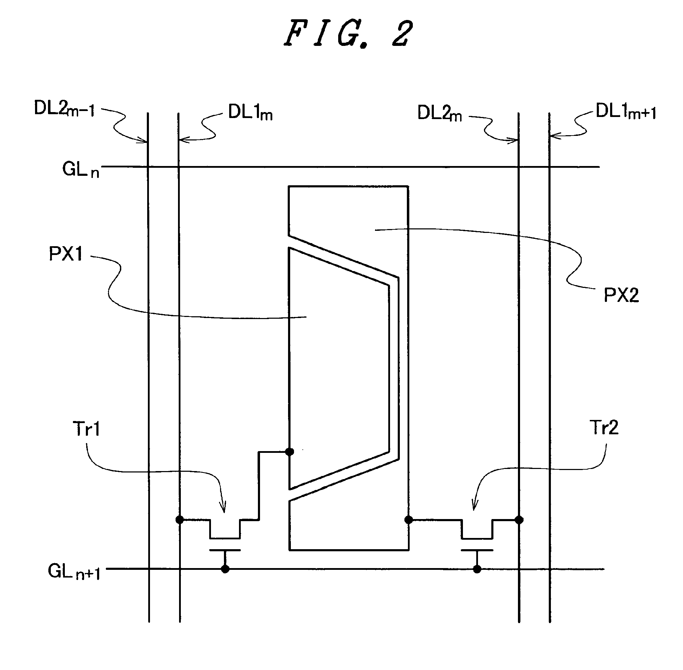

Fig. 2 is a schematic circuit diagram showing one constitutional example of one pixel on a TFT substrate of the liquid crystal display panel according to the present invention.

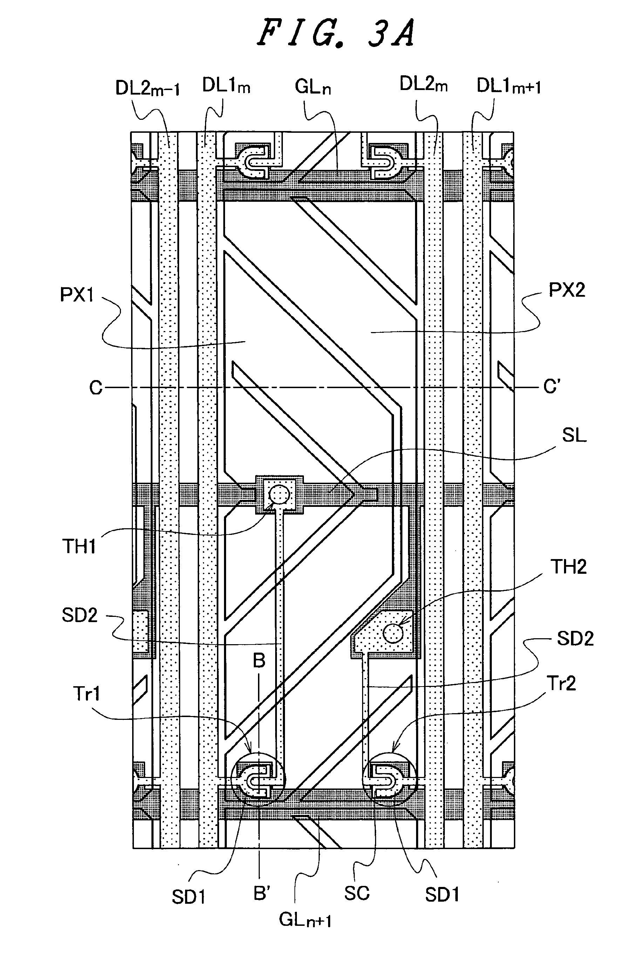

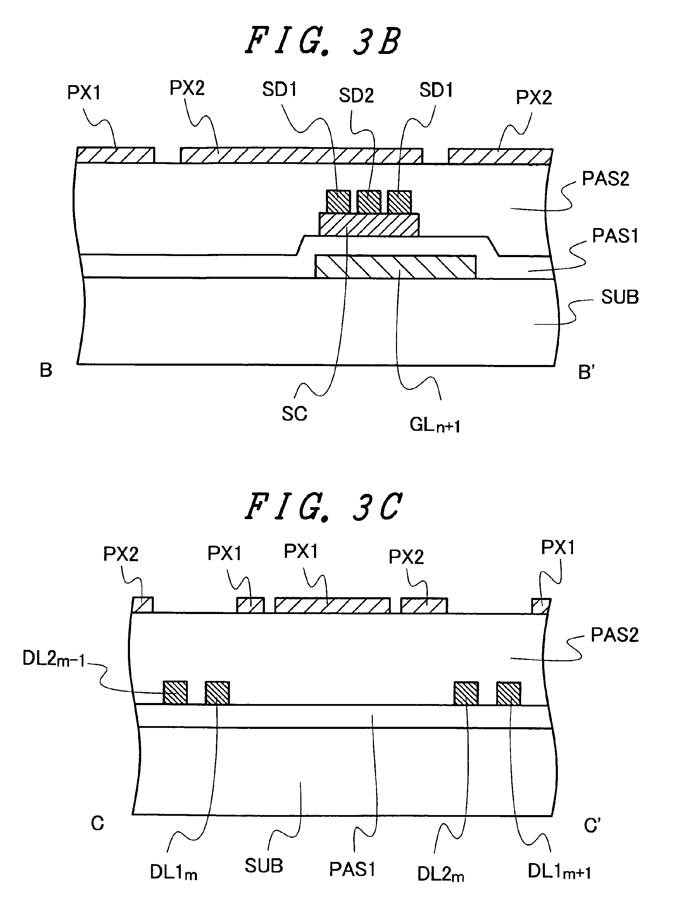

Fig. 3A is a schematic plan view showing one specific example of one pixel on the TFT substrate of the liquid crystal display panel according to the present invention, Fig. 3B is a cross-sectional view taken along a line B-B' in Fig. 3A, and Fig. 3C is a cross-sectional view taken along a line C-C' in Fig. 3A.

The present invention relates to a VA-type liquid crystal display device out of liquid crystal display devices and, more particularly to the constitution and a drive method of a liquid crystal display panel of the liquid crystal display device in which each pixel which constitutes a display region includes two switching elements and two pixel electrodes.

The liquid crystal display panel includes, for example, as shown in Fig. 1A and Fig. 1B, a first substrate 1, a second substrate 2, a liquid crystal material 3, a sealing material 4, a lower polarizer 5A and an upper polarizer 5B.

The first substrate 1 is a substrate on which a plurality of scanning signal lines, a plurality of video signal lines, a plurality of switching elements, a plurality of pixel electrodes and the like are formed. Further, when the switching element is a TFT element, the first substrate 1 is referred to as a TFT substrate. Hereinafter, the first substrate 1 is referred to as the TFT substrate 1.

The second substrate 2 is a substrate on which a counter electrode (also referred to as a common electrode), a light blocking film (also referred to as a black matrix) which divides a display region DA into pixel regions and the like are formed and is referred to as a counter substrate. Hereinafter, the second substrate 2 is referred to as the counter substrate 2. Still further, when the liquid crystal display device is a color liquid crystal display device such as a display of a television receiver set, a personal computer or the like, the counter substrate 2 also includes color filters and the like.

Further, the TFT substrate 1 and the counter substrate 2 are adhered to each other using the sealing material 4 arranged annularly outside the display region DA, for example. The liquid crystal material 3 is sandwiched (sealed) in a space surrounded by the TFT substrate 1, the counter substrate 2 and the sealing material 4.

Further, when the liquid crystal display panel is of a transmissive type or a transflective type, the lower polarizer 5A is mounted on a surface of the TFT substrate 1 which faces the outside, and the upper polarizer 5B is mounted on a surface of the counter substrate 2 which faces the outside. Further, although not shown in the drawing, for example, between the TFT substrate 1 and the lower polarizer 5A as well as between the counter substrate 2 and the upper polarizer 5B, one-layered or multiple-layered phase difference plates may be respectively provided.

When the liquid crystal display panel is of a reflective type, the lower polarizer 5A is usually unnecessary and hence, for example, only the upper polarizer 5B and the phase difference plate arranged between the counter substrate 2 and the upper polarizer 5B are provided.

Here, in each pixel which constitutes the display region of the TFT substrate 1, for generating an electrical field to drive liquid crystal molecules in the liquid crystal material 3, one TFT element and one pixel electrode are provided usually. However, in the TFT substrate 1 of the liquid crystal display panel according to the present invention, as shown in Fig. 2, for example, one pixel includes two TFT elements consisting of the first TFT element Tr1 and the second TFT element Tr2 and two pixel electrodes consisting of a first pixel electrode PX1 and a second pixel electrode PX2. One pixel in Fig. 2 corresponds to a region surrounded by two neighboring scanning signal lines GLₙ, GLₙ₊₁ (n being an arbitrary positive integer) and two neighboring video signal lines DL1ₘ, DL2ₘ (m being an arbitrary positive integer).

Here, the first pixel electrode PX1 is connected with a source of the first TFT element Tr1, and a drain of the first TFT element Tr1 is connected with a first video signal line DL1ₘ, for example. The second pixel electrode PX2 is connected with a source of the second TFT element Tr2, and a drain of the second TFT element Tr2 is connected with a second video signal line DL2ₘ, for example. Further, both of a gate of the first TFT element Tr1 and a gate of the second TFT element Tr2 are connected with the scanning signal line GLₙ₊₁.

Further, in Fig.2, a signal line DL2ₘ₋₁ arranged on the left side of the first video signal line DL1ₘ is the second video signal line of the pixel positioned on the left side of the pixel shown in Fig. 2, while a signal line DL1ₘ₊₁ arranged on the right side of the second video signal line DL2ₘ is the first video signal line of the pixel positioned on the right side of the pixel shown in Fig. 2.

In the liquid crystal display panel having such constitution, in expressing gray scales (brightness) of one pixel during one frame period, the gray scales are expressed by driving liquid crystal molecules based on the relationship between a potential of a signal applied to the first pixel electrode PX1 from the first video signal line DL1ₘ and a potential of the counter electrode, and the relationship between a potential of a signal applied to the second pixel electrode PX2 from the second video signal line DL2ₘ and the potential of the counter electrode. Accordingly, by controlling the potential of the signal applied to the first pixel electrode PX1 and the potential of the signal applied to the second pixel electrode PX2, the visibility can be enhanced.

Further, in the TFT substrate 1 in which the circuit constitution of one pixel adopts the circuit constitution shown in Fig. 2, the actual constitution of one pixel adopts the constitution shown in Fig. 3A to Fig. 3C, for example.

First of all, on a surface of an insulating substrate SUB such as a glass substrate, a plurality of scanning signal lines GL including the scanning signal lines GLₙ, GLₙ₊₁ and a plurality of holding capacitance lines SL for forming holding capacitances (also referred to as auxiliary capacitances) are formed. The holding capacitance line SL is arranged between every two neighboring scanning signal lines GL, and the respective holding capacitance lines SL are electrically connected with each other by a bus line or the like formed outside the display region DA, for example.

On the scanning signal lines GL, a first insulation layer PAS1 which functions as a gate insulating film for the TFT elements is formed. Since the first insulation layer PAS1 is formed of a silicon oxide film, for example, the first insulation layer PAS1 is formed over not only the scanning signal lines GL and the holding capacitance lines SL but also the whole surface area of the insulating substrate SUB.

On the first insulation layer PAS1, semiconductor layers SC of the TFT elements, a plurality of video signal lines DL including the first video signal line DL1ₘ and the second video signal line DL2ₘ, drain electrodes SD1 and source electrodes SD2 of the TFT elements and the like are formed. Here, the source electrode SD2 of the first TFT element Tr1 and the source electrode SD2 of the second TFT element Tr2 respectively extend in the direction toward the holding capacitance lines SL from the semiconductor layer SC and have regions which overlap the holding capacitance line SL.

Further, the source electrode SD2 of the first TFT element Tr1 and the source electrode SD2 of the second TFT element Tr2 are respectively integrally formed with the first video signal line DL1ₘ and the second video signal line DL2ₘ.

A second insulation layer PAS2 is formed on the video signal lines DL, and the first pixel electrodes PX1 and the second pixel electrodes PX2 are formed on the second insulation layer PAS2. The second insulation layer PAS2 is formed on the whole surface area of the insulating substrate SUB (the first insulation layer PAS1). For example, as shown in Fig. 3B and Fig. 3C, the second insulation layer PAS2 is formed such that a surface (a surface on which the pixel electrodes are formed) thereof becomes flat. The second insulation layer PAS2 may be formed such that a thickness thereof becomes uniform over the respective regions thereof.

Further, the first pixel electrodes PX1 formed on the second insulation layer PAS2 are connected with the source electrodes SD2 of the first TFT elements Tr1 via through holes TH1, while the second pixel electrodes PX2 formed on the second insulation layer PAS2 are connected with the source electrodes SD2 of the second TFT elements Tr2 via through holes TH2.

Further, the first video signal line DL1ₘ and the second video signal line DL2ₘ arranged for one pixel are, for example, as shown in Fig. 3A, arranged to sandwich two pixel electrodes PX1, PX2 of the pixel therebetween. Further, between two pixels which are arranged adjacent to each other in the extending direction of the scanning signal line GL, for example, as shown in Fig. 3A, the second video signal line for one pixel and the first video signal line for another pixel are arranged.

Here, the constitution shown in Fig. 3A to Fig. 3C is merely one example of the constitution of one pixel. It is needless to say that the position of the holding capacitance line SL, planar shapes of the drain electrode SD1 and the source electrode SD2 of the TFT element, planar shapes of the first pixel electrode PX1 and the second pixel electrode PX2 or the like can be suitably changed.

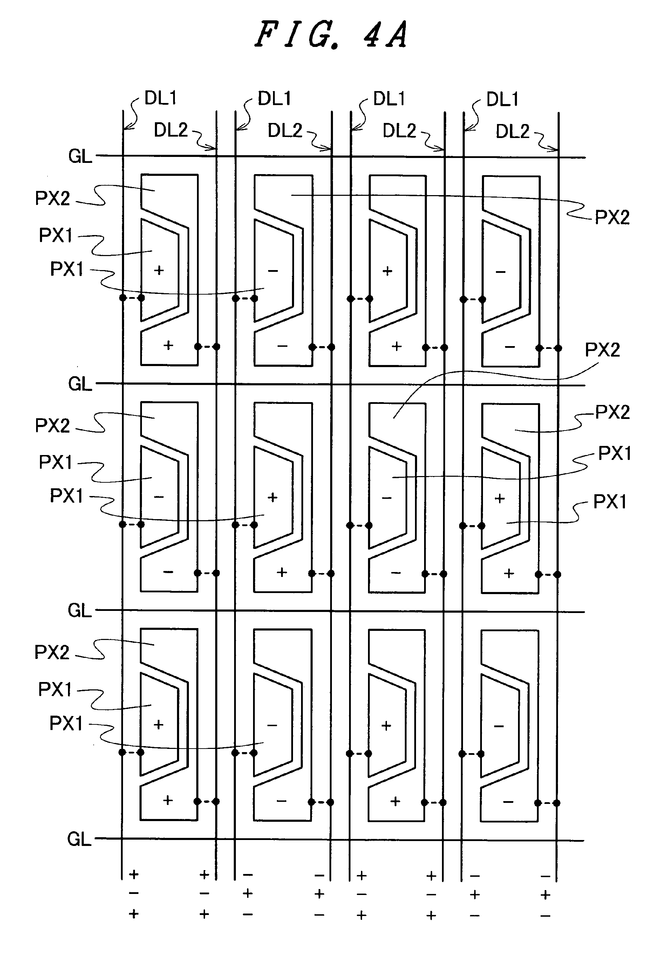

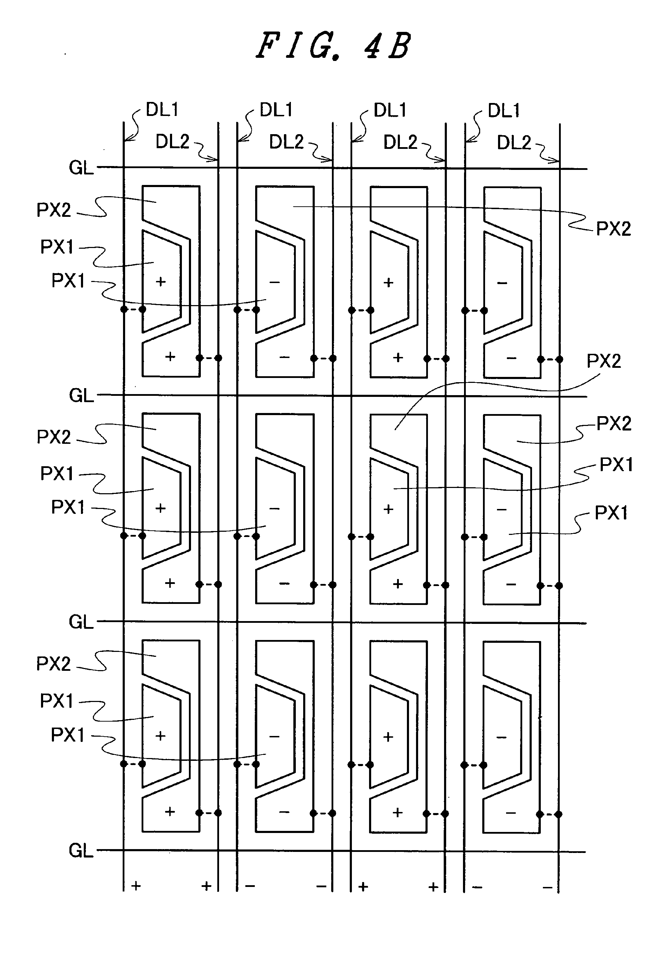

Fig. 4A is a schematic view showing one example of the conventional constitution and drive method of a liquid crystal display panel which becomes a premise of the present invention, and Fig. 4B is a schematic view showing another example of the conventional constitution and drive method of a liquid crystal display panel which becomes a premise of the present invention.

In Fig. 4A and Fig. 4B, the TFT elements (switching elements) are omitted. In Fig. 4A and Fig. 4B, symbol "+" added to the pixel electrodes PX1, PX2 implies that a potential of a signal applied to the pixel electrode is higher than a potential of a signal applied to the counter electrode (the potential applied to the pixel electrode being the positive polarity), while symbol "-" added to the pixel electrodes PX1, PX2 implies that the potential of a signal applied to the pixel electrode is lower than the potential of a signal applied to the counter electrode (the potential applied to the pixel electrode being the negative polarity).

In the liquid crystal display panel in which each pixel which constitutes the display region has the constitution shown in Fig. 2, for example, the relationship between the first pixel electrodes PX1 and the second pixel electrodes PX2 in each pixel and the relationship between the first video signal line DL1 and the second video signal line DL2 are established as shown in Fig. 4A, for example. That is, in all pixels arranged in the extending direction of video signal line, the first pixel electrodes PX1 are connected with the first video signal line DL1, and the second pixel electrodes PX2 are connected with the second video signal line DL2.

In displaying images on the liquid crystal display panel, for example, as shown in Fig. 4A, there exists a method which drives the liquid crystal display panel by dot inversion driving in which polarities of pixel electrodes of two pixels arranged adjacent to each other with the scanning signal line GL sandwiched therebetween assume polarities opposite to each other and, at the same time, polarities of pixel electrodes of two pixels arranged adjacent to each other with the video signal lines DL1, DL2 sandwiched therebetween assume polarities opposite to each other.

However, in dot inversion driving, during one frame period, it is necessary to generate the video signals to be applied to the video signal lines such that, for example, as shown in Fig. 4A, the signal of positive polarity (+) and the signal of negative polarity (-) are alternately generated. Accordingly, processing (load) in a drive circuit for generating video signals to be supplied to the video signal lines is increased and hence, a heat value of the drive circuit is increased.

On the other hand, in displaying images on the liquid crystal display panel, for example, as shown in Fig. 4B, there exists a method which drives the liquid crystal display panel by column inversion driving in which polarities of pixel electrodes of two pixels arranged adjacent to each other with the scanning signal line GL sandwiched therebetween assume the same polarity, while polarities of pixel electrodes of two pixels arranged adjacent to each other with the video signal lines DL1, DL2 sandwiched therebetween assume polarities opposite to each other.

However, in column inversion driving, the polarities of the pixel electrodes of the respective pixels during one frame period assume a state , for example, as shown in Fig. 4B, that a column in which all polarities of the pixel electrodes of a plurality of pixels arranged in the extending direction of the video signal line assume the positive polarity and a column in which all polarities of the pixel electrodes of a plurality of pixels arranged in the extending direction of the video signal line assume the negative polarity are alternately arranged in the extending direction of the scanning signal line. Accordingly, flickers (flow of vertical stripes) or vertical smears occur and hence, image quality is liable to be easily deteriorated.

Hereinafter, on the premise of the liquid crystal display panel having the above-mentioned constitution, one example of the constitution of the liquid crystal display panel which can suppress a heat value of the drive circuit for generating the video signal to a lower level and can prevent the deterioration of image quality attributed to flickers is explained.

### [Embodiment 1]

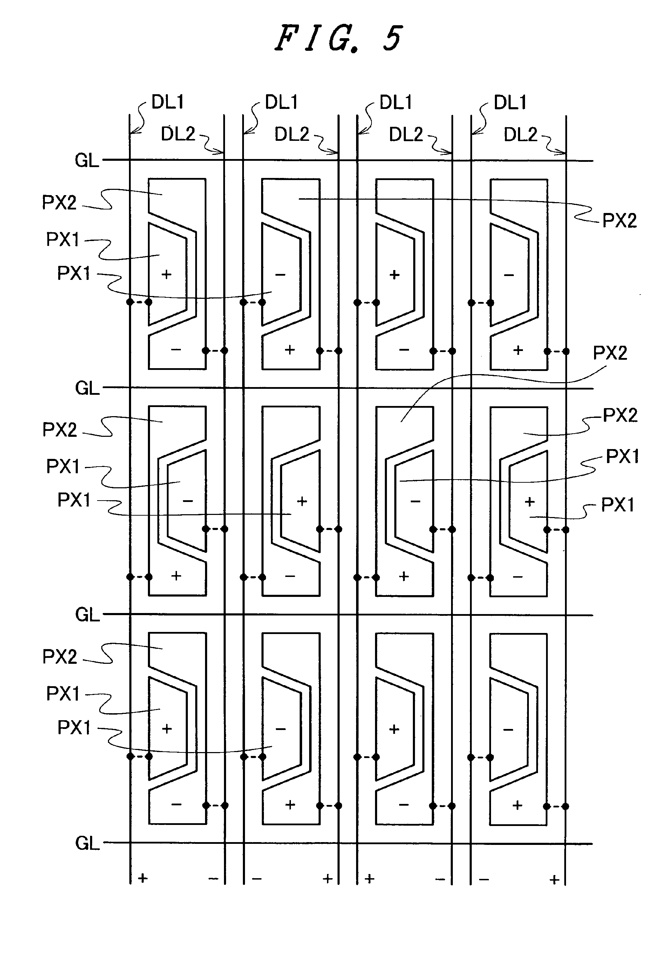

Fig. 5 is a schematic view showing one constitutional example of the liquid crystal display panel of an embodiment 1 according to the present invention.

In Fig. 5, TFT elements (switching elements) are omitted. symbol "+" added to the pixel electrodes PX1, PX2 implies that a potential of a signal applied to the pixel electrode is higher than a potential of a signal applied to the counter electrode (the potential applied to the pixel electrode being the positive polarity), while symbol "-" added to the pixel electrodes PX1, PX2 implies that the potential of a signal applied to the pixel electrode is lower than the potential of a signal applied to the counter electrode (the potential applied to the pixel electrode being the negative polarity).

In the liquid crystal display panel of the embodiment 1, for example, as shown in Fig. 5, one pixel includes two pixel electrodes consisting of a first pixel electrode PX1 and a second pixel electrode PX2, two pixel electrodes in each pixel are respectively sandwiched by a first video signal line DL1 and a second video signal line DL2, and are connected with the first video signal line DL1 or the second video signal line DL2 via a TFT element (not shown in the drawing).

Further, in the liquid crystal display panel of the embodiment 1, to focus on a plurality of pixels arranged in the extending direction of the video signal lines DL1 and DL2, the pixel in which the first pixel electrode PX1 is connected with the first video signal line DL1 and the second pixel electrode PX2 is connected with the second video signal line DL2, and the pixel in which the second pixel electrode PX2 is connected with the first video signal line DL1 and the first pixel electrode PX1 is connected with the second video signal line DL2 are alternately arranged.

Further, in the liquid crystal display panel of the embodiment 1, to focus on a plurality of pixels arranged in the extending direction of the scanning signal lines GL, only the pixels in which the first pixel electrode PX1 is connected with the first video signal line DL1 and the second pixel electrode PX2 is connected with the second video signal line DL2 or the pixels in which the second pixel electrode PX2 is connected with the first video signal line DL1 and the first pixel electrode PX1 is connected with the second video signal line DL2 are arranged.

Further, in the liquid crystal display panel of the embodiment 1, during one frame period, the polarity of the video signal applied to the pair of first video signal line DL1 and the second video signal line DL2 always assumes either one of positive polarity and negative polarity and, at the same time, when the video signal applied to one video signal line always assumes the positive polarity, the video signal applied to the other video signal line always assumes the negative polarity.

Still further, in the liquid crystal display panel of the embodiment 1, during one frame period, the polarities of the video signals applied to two video signal lines DL1 and DL2 arranged between two pixels adjacent to each other in the extending direction of the scanning signal lines GL assume the same polarity.

By adopting the above-mentioned constitution of the liquid crystal display panel and by setting the polarities of the video signals applied to the respective video signal lines in the above-mentioned manner, during one frame period, the relationship (polarity) between the potential of the signal applied to the pixel electrodes PX1 and PX2 of respective pixels and the potential of the counter electrode assumes the relationship shown in Fig. 5. First of all, to focus on one pixel, the polarity of the first pixel electrode PX1 and the polarity of the second pixel electrode PX2 always assume polarities opposite to each other.

Further, to focus on two pixels arranged adjacent to each other with the scanning signal line GL or the video signal lines DL1 and DL2 sandwiched therebetween, the polarity of the first pixel electrode PX1 in one pixel and the polarity of the first pixel electrode PX1 in the other pixel always assume polarities opposite to each other and, at the same time, the polarity of the second pixel electrode PX2 in one pixel and the polarity of the second pixel electrode PX2 in the other pixel always assume polarities opposite to each other.

That is, in the liquid crystal display device having the liquid crystal display panel of the embodiment 1, in generating the video signal in the drive circuit, the video signal to be applied to the respective video signal lines can be generated by a method corresponding to the column inversion driving, while in driving the liquid crystal display panel based on the video signal applied to the respective video signal lines, the dot inversion driving can be performed.

Accordingly, the liquid crystal display device having the liquid crystal display panel of the embodiment 1 can suppress a heat value of the drive circuit for generating the video signal to a lower level and can prevent the deterioration of image quality attributed to flickers or the like.

Although not shown in the drawing, in manufacturing the TFT substrate 1 having the constitution shown in Fig. 5, one pixel may be configured, for example, as shown in Fig. 3A and Fig. 3B and, at the same time, a plan layout of two pixels arranged adjacent to each other with the scanning signal line GL sandwiched therebetween may be set to a plan layout shown in Fig. 3A or a plan layout obtained by reversing the layout shown in Fig. 3A horizontally.

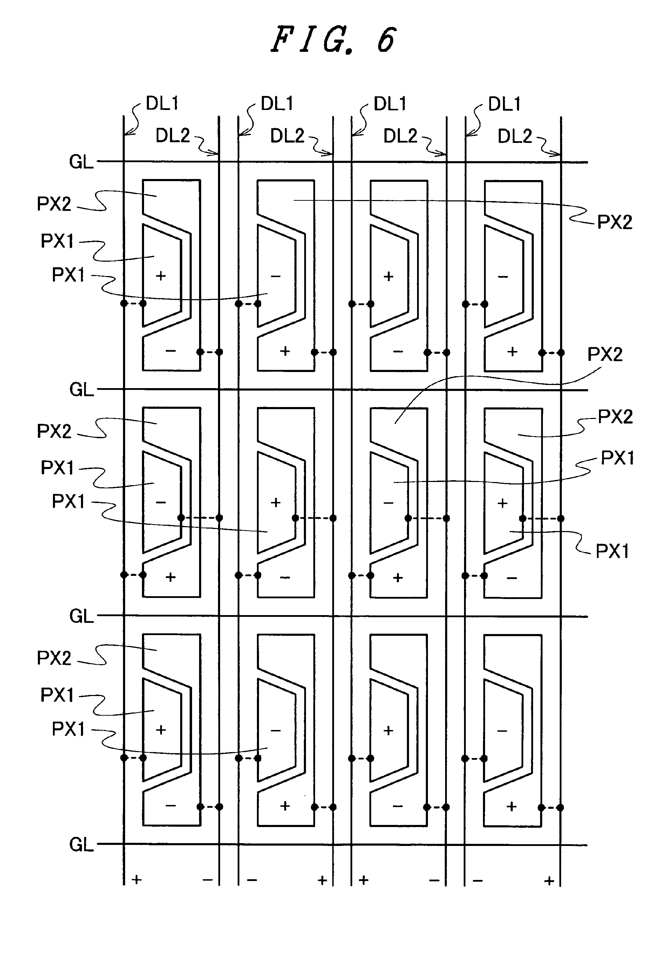

Fig. 6 is a schematic view showing a modification of the liquid crystal display panel of the embodiment 1.

Here, in Fig. 6, TFT elements (switching elements) are omitted. Further, in Fig. 6, symbol "+" added to the pixel electrodes PX1, PX2 implies that a potential of a signal applied to the pixel electrode is higher than a potential of a signal applied to the counter electrode (the potential applied to the pixel electrode being the positive polarity), while symbol "-" added to the pixel electrodes PX1, PX2 implies that the potential of a signal applied to the pixel electrode is lower than the potential of a signal applied to the counter electrode (the potential applied to the pixel electrode being the negative polarity).

In explaining the constitution of the liquid crystal display panel of the embodiment 1, in Fig. 5, the explanation is made with respect to the case in which the direction of the pixel electrode is inverted in the lateral direction between the pixel in which the first pixel electrode PX1 is connected with the first video signal line DL1 and the second pixel electrode PX2 is connected with the second video signal line DL2, and the pixel in which the second pixel electrode PX2 is connected with the first video signal line DL1 and the first pixel electrode PX1 is connected with the second video signal line DL2.

However, in the liquid crystal display panel of the embodiment 1, the relationship of the video signal line to which the respective pixel electrodes PX1 and PX2 are connected may satisfy the above-mentioned conditions with respect to two pixels arranged adjacent to each other with the scanning signal line GL sandwiched therebetween. Accordingly, for example, as shown in Fig. 6, the respective pixel electrodes PX1 and PX2 of two pixels arranged adjacent to each other with the scanning signal line GL sandwiched therebetween may be arranged in the same direction.

### [Embodiment 2]

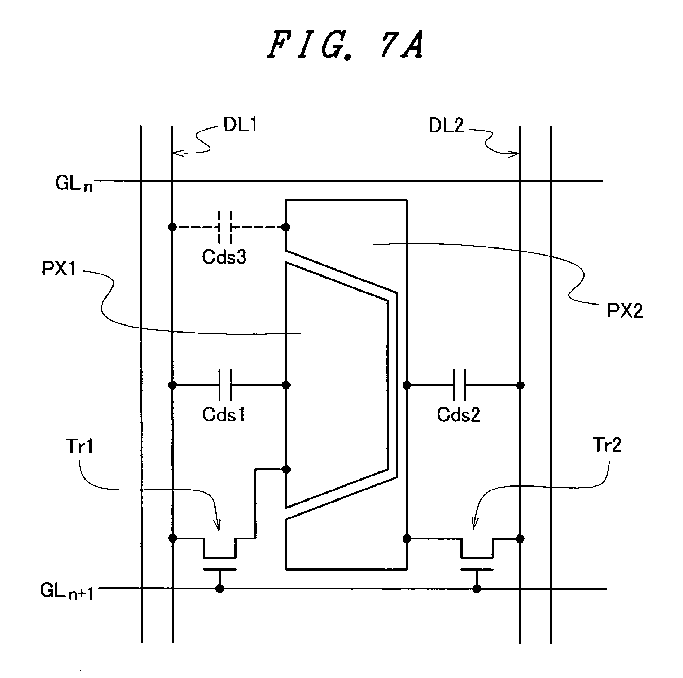

Fig. 7A to Fig. 7C are schematic views for explaining one example of a drawback which may arise in the liquid crystal display panel of the embodiment 1.

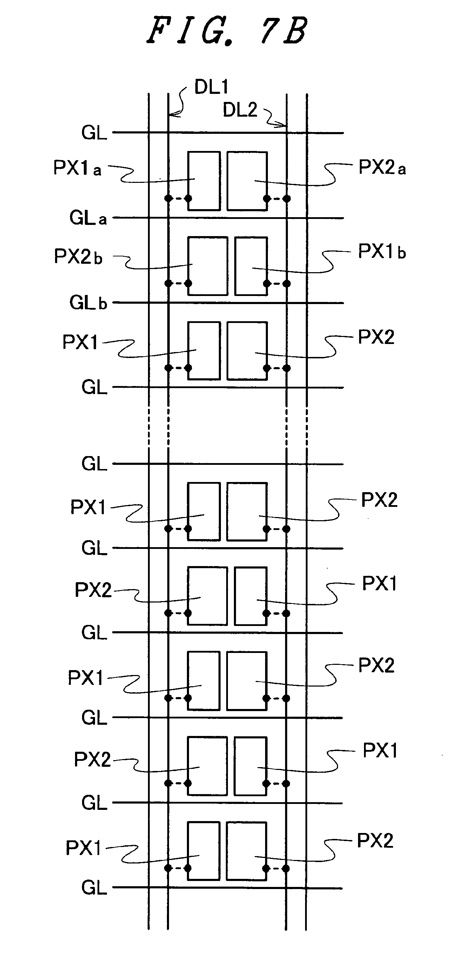

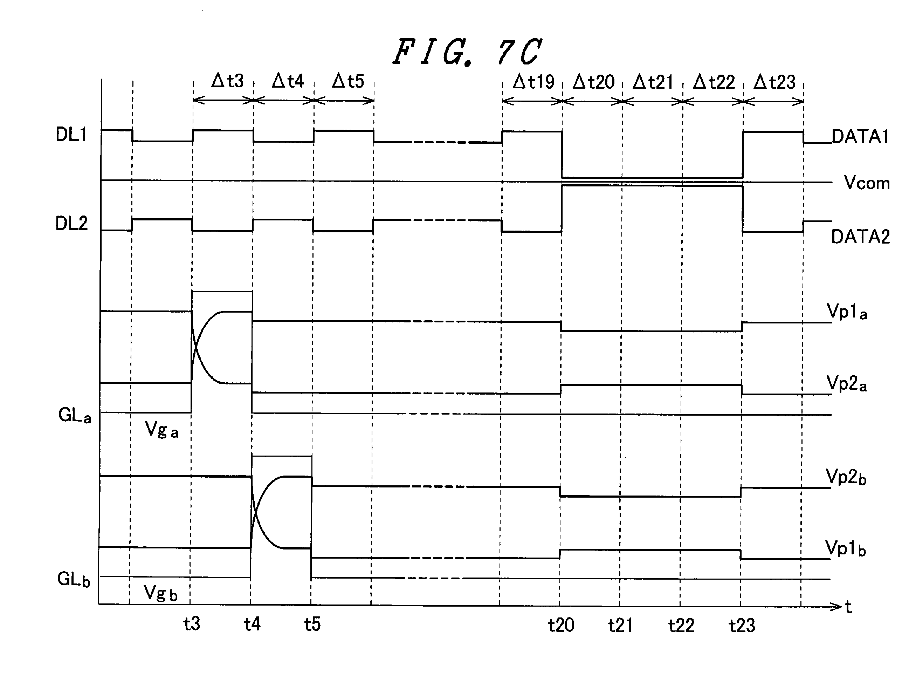

Fig. 7A is a schematic circuit diagram showing one example of parasitic capacitance generated in one pixel in the liquid crystal display panel of the embodiment 1, Fig. 7B is a schematic view showing the constitution of the pixels arranged in the extending direction of a video signal line by focusing on the parasitic capacitance, and Fig. 7C is a schematic chart showing a change of potentials of video signals applied to video signal lines shown in Fig. 7B and pixel electrodes shown in Fig. 7B.

Here, in Fig. 7B, TFT elements (switching elements) are omitted.

The one pixel on a TFT substrate 1 of a liquid crystal display panel of the embodiment 1 has the circuit constitution shown in Fig. 7A, for example.

Here, the first pixel electrodes PX1 and the second pixel electrodes PX2 are, for example, as shown in Fig. 3C, formed on the surface on which the video signal lines DL1 and DL2 and the like are formed by way of the second insulation layer PAS2. Accordingly, for example, as shown in Fig. 7A, first parasitic capacitance Cds1 is formed between the first pixel electrode PX1 and the first video signal line DL1, and second parasitic capacitance Cds2 is formed between the second pixel electrode PX2 and the second video signal line DL2. Further, in an actual operation, third parasitic capacitance Cds3 is formed between the second pixel electrode PX2 and the first video signal line DL1. However, the third parasitic capacitance Cds3 is extremely small compared to the first parasitic capacitance Cds1 and the second parasitic capacitance Cds2 and hence, the thirdparasitic capacitance Cds3 canbe ignored in the embodiment 2.

By focusing on such parasitic capacitances formed between the pixel electrodes and the video signal lines, to schematically show the constitution of the plurality of pixels arranged in the extending direction of the video signal line in the liquid crystal display panel of the embodiment 2, the constitution of one pixel can be expressed as shown in Fig. 7B.

Further, during one frame period, the first video signal DATA1 applied to the first video signal line DL1 to which the pixel electrodes PX1 of the pixels shown in Fig. 7B are connected and the second video signal DATA2 applied to the second video signal line DL2 to which the pixel electrodes PX2 of the pixels shown in Fig. 7B are connected are, for example, constituted of signals shown in Fig. 7C, for example.

Here, in the first pixel electrodes PX1ₐ and the second pixel electrodes PX2ₐ shown in Fig. 7B, the first video signal DATA1 applied to the first video signal line DL1 and the second video signal DATA2 applied to the second video signal line DL2 are respectively written during a period Δt3 from a point of time t3 to a point of time t4 shown in Fig. 7C, for example. In the same manner, in the first pixel electrodes PX1_{b} and the second pixel electrodes PX1_{b} shown in Fig. 7B, the first video signal DATA1 applied to the first video signal line DL1 and the second video signal DATA2 applied to the second video signal line DL2 are respectively written during a period Δt4 from a point of time t4 to a point of time t5 shown in Fig. 7C, for example. Here, in Fig. 7C, symbol Vp1ₐ indicates a potential of the first pixel electrodes PX1ₐ, symbol Vp2ₐ indicates a potential of the second pixel electrodes PX2ₐ, symbol Vp1_{b} indicates a potential of the first pixel electrodes PX1_{b}, and symbol Vp2_{b} indicates a potential of the second pixel electrodes PX2_{b}. Further, in Fig. 7C, symbol Vgₐ indicates a potential of the scanning signal applied to the scanning signal line GLₐ, and symbol Vg_{b} indicates a potential of the scanning signal applied to the scanning signal line GL_{b}.

When the video signal is written in the first pixel electrodes PX1ₐ and PX1_{b} and second pixel electrodes PX2ₐ and PX2_{b}, the potential is slightly changed at a point of time that the writing is finished. However, thereafter, the potential of the written signal is held until the writing of the video signal in the next period is performed usually.

However, there may be a case that, after the video signal is written in the first pixel electrodes PX1ₐ and PX1_{b} and the second pixel electrodes PX2ₐ and PX2_{b}, the first video signal DATA1 and the second video signal DATA2 in the same frame period include the video signal whose gray scale is largely changed such as a boundary between a period Δt19 and a period Δt20 or a boundary between a period Δt22 and a period Δt23 shown in Fig. 7C, for example.

In this case, the potential of the video signal written in the first pixel electrodes PX1ₐ and PX1_{b} and the second pixel electrodes PX2ₐ and PX2_{b} is changed only during the periods Δt20 to Δt22, for example, thus generating a phenomenon referred to as coupling smears. Accordingly, the liquid crystal display device having the liquid crystal display panel of the embodiment 1 has possibility of deteriorating image quality due to coupling smears.

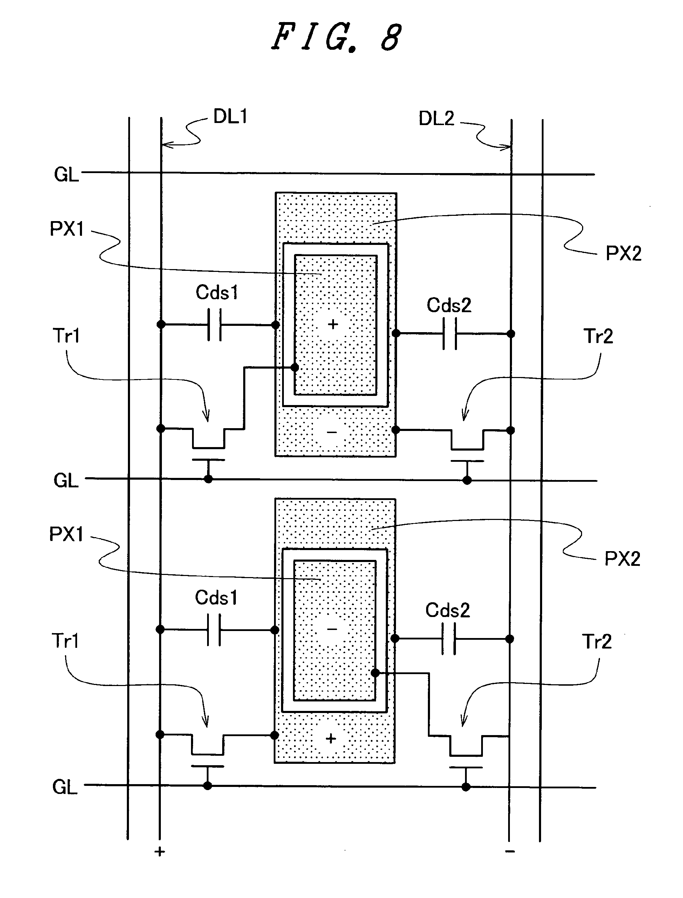

Fig. 8 is a schematic circuit diagram showing one constitutional example of a liquid crystal display panel of the embodiment 2 according to the present invention.

The occurrence of the above-mentioned coupling smears is relevant to the formation of the parasitic capacitance only between the first pixel electrode PX1 in one pixel and the first video signal line DL1 or only between the second pixel electrode PX2 in one pixel and the second signal line DL2.

Accordingly, in the liquid crystal display panel of the embodiment 2, for example, as shown in Fig. 8, a planar shape of the second pixel electrode PX2 is formed in a closed annular shape which surrounds the first pixel electrode PX1. Due to such structure, when viewed in a plan view, the second pixel electrode PX2 extends between the first pixel electrode PX1 and the first video signal line DL1, while the second pixel electrode PX2 also extends between the first pixel electrode PX1 and the second video signal line DL2.

Accordingly, in the liquid crystal display panel of the embodiment 2, the first parasitic capacitance Cds1 is generated between the second pixel electrode PX2 and the first video signal line DL1, and second parasitic capacitance Cds2 is generated between the second pixel electrode PX2 and the second video signal line DL2, while no parasitic capacitance is generated between the first pixel electrode PX1 and the first video signal line DL1 as well as between the first pixel electrode PX1 and the second video signal line DL2.

Due to such constitution, no change of potential attributed to the parasitic capacitance between the video signal lines DL1 and DL2 is generated with respect to the signal written in the first pixel electrode PX1. Further, although the potential attributed to the parasitic capacitance generated between the video signal lines DL1 and DL2 is changed with respect to the signal written in the second pixel electrode PX2, the parasitic capacitance is generated between two video signal lines DL1 and DL2 arranged with the second pixel electrode PX2 sandwiched therebetween. Accordingly, there is no deviation in the change of the potential of the signal written in the second pixel electrode PX2 and hence, the occurrence of coupling smears can be prevented.

Here, in the example shown in Fig. 8, the planar shape of the second pixel electrode PX2 is formed in a closed annular shape. It is needless to say, however, that the planar shape of the first pixel electrode PX1 may be formed in an annular closed shape which surrounds the second pixel electrode PX2 as an opposite case.

Further, in the example shown in Fig. 8, the planar shape of the second pixel electrode PX2 is formed in a closed annular shape. However, the planar shape of the second pixel electrode PX2 is not limited to such a closed annular shape, and the planar shape of the second pixel electrode PX2 may be formed in an annular shape and a U-shape such that the second pixel electrode PX2 surrounds the first pixel electrode PX1 and has a portion thereof extending parallel to the scanning signal line GL opened.

The present invention has been specifically explained in conjunction with embodiments heretofore. However, it is needless to say that the present is not limited to the above-mentioned embodiments and various modifications can be made without departing from the gist of the present invention.

## Claims

1. A liquid crystal display device comprising:
a first substrate on which a plurality of scanning signal lines (GL), a plurality of video signal lines (DL1, DL2), a plurality of switching elements (Tr1, Tr2) and a plurality of pixel electrodes (PX1, PX2) are formed;
a second substrate on which a counter electrode is formed; and
a liquid crystal material sandwiched between the first substrate and the second substrate, wherein
a display region is formed of a mass of pixels each having a first switching element (Tr1), a first pixel electrode (PX1) connected to the first switching element, a second switching element (Tr2), and a second pixel electrode (PX2) connected to the second switching element, wherein
the first switching element and the second switching element in one pixel are respectively connected with different video signal lines (DL1, DL2), and
the relationship between a potential of a signal applied to the first pixel electrode in one pixel and a potential of a signal applied to the counter electrode and the relationship between a potential of a signal applied to the second pixel electrode in the one pixel and the potential of the signal applied to the counter electrode during one frame period are set such that one relationship assumes the positive-polarity relationship and the other relationship assumes the negative-polarity relationship.

2. A liquid crystal display device according to claim 1, wherein
the relationship between the potential of the signal applied to the first pixel electrode in one pixel and the potential of the signal applied to the counter electrode and the relationship between a potential of a signal applied to the first pixel electrode in another one pixel adjacent to the one pixel with the scanning signal line or the video signal line sandwiched therebetween and the potential of the signal applied to the counter electrode during one frame period are set such that one relationship assumes the positive-polarity relationship and the other relationship assumes the negative-polarity relationship.

3. A liquid crystal display device comprising:
a first substrate on which a plurality of scanning signal lines (GL), a plurality of video signal lines (DL1, DL2), a plurality of switching elements (Tr1, Tr2) and a plurality of pixel electrodes (PX1, PX2) are formed;
a second substrate on which a counter electrode is formed; and
a liquid crystal material sandwiched between the first substrate and the second substrate, wherein
a display region is formed of a mass of pixels each having a first switching element (Tr1), a first pixel electrode (PX1) connected to the first switching element, a second switching element (Tr2), and a second pixel electrode (PX2) connected to the second switching element, wherein
the first switching element and the second switching element in one pixel are respectively connected with the different video signal lines (DL1, DL2), and
in the extending direction of the video signal line, the pixel in which the first switching element is connected with the first video signal line and the second switching element is connected with the second video signal line, and the pixel in which the second switching element is connected with the first video signal line and the first switching element is connected with the second video signal line are arranged alternately.

4. A liquid crystal display device according to claim 3, wherein
the first video signal line and the second video signal line are arranged to sandwich the pixels having switching elements connected to the respective video signal lines, and between two neighboring pixels arranged in parallel in the extending direction of the scanning signal line, the second video signal line for one pixel out of two pixels and the first video signal line for the other pixel out of two pixels are arranged.

5. A liquid crystal display device according to claim 3, wherein
the relationship between a potential of a signal applied to the first video signal line and a potential of the counter electrode and the relationship between a potential of a signal applied to the second video signal line and the potential of the counter electrode during one frame period are respectively always assume the positive-polarity relationship or always assume the negative-polarity relationship, and
when one relationship always assumes the positive-polarity relationship, the other relationship always assumes the negative-polarity relationship.

6. A liquid crystal display device according to claim 3, wherein one pixel electrode out of the first pixel electrode and the second pixel electrode has an annular closed planner shape which surrounds the other pixel electrode.

7. A liquid crystal display device according to claim 3, wherein the switching element is a TFT element.
